# NEUE EUROPÄISCHE PATENTSCHRIFT

(11) **EP 0 734 842 B2**
(45) Veröffentlichungstag und Bekanntmachung des Hinweises auf die Entscheidung über den Einspruch: **17.05.2006**
(45) Hinweis auf die Patenterteilung: 11.08.1999
(21) Anmeldenummer: 96103986.4
(22) Anmeldetag: 13.03.1996
(51) Int. Cl.: B29C 67/00

(54) **Vorrichtung und Verfahren zum Herstellen eines dreidimensionalen Objektes**
Apparatus and method for manufacturing three-dimensional objects
Dispositif et procédé pour la fabrication d'objets tridimensionnels

(30) Priorität: 30.03.1995 DE 19511772
(43) Veröffentlichungstag der Anmeldung: 02.10.1996
(73) Patentinhaber: EOS GmbH Electro Optical Systems, 82152 Krailling (DE)
(72) Erfinder: Wilkening, Christian, 86911 Diessen (DE); Lohner, Andreas, 85540 Haar (DE)
(74) Vertreter: Hofer, Dorothea

(56) Entgegenhaltungen:
- EP-A- 0 426 363
- WO-A-92/08592
- DE-U- 9 319 567
- US-A- 4 752 498
- US-A- 4 927 992
- US-A- 5 011 635
- US-A- 5 156 700
- US-A- 5 173 220
- PATENT ABSTRACTS OF JAPAN vol. 14, no. 361 (M-1006) [4304] , 6.August 1990 & JP-A-02 128829 (OSAKA PREFECTURE), 17.Mai 1990,
- PATENT ABSTRACTS OF JAPAN vol. 017, no. 275 (M-1418), 27.Mai 1993 & JP-A-05 008305 (MITSUI ENG & SHIPBUILD CO LTD), 19.Januar 1993,
- Solid Freeform Fabrication Prodeedings "Reduncing or Elimination Curl on Wax Parts Produced in the Sinterstation TM 2000 System" Paul Forderhase and Richard Corden, DTM Corporation, The University of Texas at Austin 1993
- DTM Corporation, The Sinterstation 2000 System - Guide to Material Wax, Features 9 to 13, December 199

## Beschreibung

Die Erfindung betrifft eine Vorrichtung und ein Verfahren zum Herstellen eines dreidimensionalen Objektes nach dem Oberbegriff des Patentanspruches 1 bzw. 10.

Ein unter dem Namen Selektives Lasersintern bekanntes Verfahren zum Herstellen eines dreidimensionalen Objektes durch aufeinanderfolgendes Verfestigen von Schichten eines pulverförmigen, mittels elektromagnetischer Strahlung verfestigbaren Aufbaumaterials an den dem jeweiligen Querschnitt des Objektes entsprechenden Stellen sowie eine Vorrichtung zur Durchführung dieses Verfahrens ist aus der DE-C-4300 478 bekannt. Bei der bekannten Vorrichtung wird das zu bildende Objekt auf einer metallischen Plattform aufgebaut, die Teil der Vorrichtung ist. Die Sinterung bzw. Verfestigung der Schichten des Objektes kann jedoch nicht mit der ersten auf die Plattform aufgebrachten Pulverschicht beginnen, da die darin verfestigten Bereiche keinen seitlichen Halt haben und deshalb beim Aufbringen der nächsten Pulverschicht von dem das Pulver auftragenden Wischer auf der metallischen Plattform verschoben werden können. Deshalb werden üblicherweise zunächst mindestens eine, besser jedoch mehrere Pulverschichten durch den Laserstrahl vollständig verfestigt, um eine Grundlage für das Objekt zu bilden. Die vollständige Verfestigung der ersten auf die metallische Plattform aufgebrachten Schichten erfordert jedoch eine lange zusätzliche Bearbeitungszeit, welche die gesamte Bauzeit des Objektes erheblich verlängert

Bei der in der US-A-4,752,498 offenbarten Vorrichtung handelt es sich um eine Vorrichtung, in derflüssiges Material verfestigt wird. Diese Vorrichtung weist keinen höhenverstellbaren Träger auf und weist demzufolge auch keine auf der Oberseite des höhenverstellbaren Trägers lösbar befestigte Unterlage auf.

Auch die in der DE-U-93 19 567 offenbarte Vorrichtung weist keine lösbar befestigte, vorgefertigte Unterlage auf. Vielmehr handelt es sich hier um eine Schicht, die zwar nicht unmittelbar Teil des zu bildenden Objektes ist, aber sehr wohl während des Herstellungsverfahrens hergestellt wird. Damit handelt es sich nicht um eine vorgefertigte Unterlage.

Bei der in der US-A-5,173,220 offenbarten Vorrichtung handelt es sich um eine Vorrichtung, in der flüssiges Material verfestigt wird. Zwar ist in dieser Vorrichtung eine Unterlage offenbart, es ist jedoch Spalte 4, Zeilen 11 bis 14 zu entnehmen, daß es sich hierbei nicht um eine vorgefertigte Unterlage im Sinne der vorliegenden Anmeldung handelt, sondern daß diese Unterlage ähnlich wie die in der DE-U-93 19 567 gezeigte Unterlage während des Ablaufes des Verfahrens zur Herstellung des dreidimensionalen Objektes gebildet wird.

Die WO 92/08592 ist nicht für die Gegenstände der Patentansprüche 1 und 10 relevant. Es sei darauf hingewiesen, daß diese Druckschrift keinen Träger offenbart, der eine Kühlvorrichtung aufweist.

In der Vorrichtung, die in der JP-A-02 128829 offenbart ist, wird eine Flüssigkeit verfestigt. Zwar weist diese Vorrichtung eine vorgefertigte Unterlage auf, diese Unterlage ist jedoch nicht aus einer stabilen Platte, sondern aus einem biegbaren Blatt gebildet. Dieses biegbare Blatt ist insbesondere dazu geeignet, die Nachbearbeitungszeit des dreidimensionalen Objektes zu verkürzen.

Auch in der in der US-A-5,011,635 offenbarten Vorrichtung wird ein dreidimensionales Objekt durch die Verfestigung einer Flüssigkeit gebildet. Den Figuren dieser Druckschrift ist entnehmbar, daß sich auf einem offensichtlich höhenverstellbaren Träger eine nicht näher durch ein Bezugszeichen gekennzeichnete Schicht befindet, auf der ein dreidimensionales Objekt gebildet ist. Dem Text der Druckschrift ist in Spalte 4, Zeilen 53 bis 60 entnehmbar, daß es sich auch hier um eine Schicht handelt, die beim Bilden des dreidimensionalen Objektes gebildet wird. Es handelt sich also nicht um eine lösbar befestigte, vorgefertigte Unterlage im Sinne der vorliegenden Anmeldung.

Die EP-A-0 426 364 offenbart eine Vorrichtung, in der thermoplastische Harze, geschmolzene Metalle, Zweikomponentenkleber etc. zur Bildung eines dreidimensionalen Objektes verwendet werden. Weder weist diese Vorrichtung einen höhenverstellbaren Träger auf, noch wird hier ein Material mittels einer Bestrahlungseinrichtung verfestigt. Es handelt sich hierbei um eine von dem Gegenstand grundsätzlich verschiedene Vorrichtung.

Bei der in der JP 5-008305 offenbarten Vorrichtung handelt es sich um eine Vorrichtung, in der dreidimensionale Objekte durch die Verfestigung einer Flüssigkeit gebildet werden.

In der in der US-A-5,156,700 offenbarten Vorrichtung werden dreidimensionale Objekte aus fließbaren Materialien (Spalte 1, Zeile 65) in einer geschichteten Anordnung von Stützmaterialien gebildet. Zwar offenbart diese Vorrichtung eine Platte, diese ist jedoch nicht aus einem Material gebildet, an dem das Aufbaumaterial haftet, vielmehr sind kegelförmige Stifte vorgesehen, die die entsprechenden Halteschichten verankern (Spalte 5, Zeilen 39 bis 53). Insgesamt läßt sich sagen, daß es sich bei dieser Vorrichtung um eine von dem Gegenstand der vorliegenden Anmeldung grundsätzlich verschiedene Vorrichtung handelt.

Es ist Aufgabe der Erfindung, eine Vorrichtung bzw. ein Verfahren zur Herstellung eines dreidimensionalen Objektes bereitzustellen, bei der bzw. bei dem die Herstellungszeit für das Objekt verkürzt wird.

Die Aufgabe wird gelöst durch eine Vorrichtung nach Patentanspruch 1 bzw. durch ein Verfahren nach Patentanspruch 10. Zweckmäßige Weiterbildungen der Erfindung sind in den abhängigen Ansprüchen beschrieben.

Ausführungsbeispiele der Erfindung sind in der Zeichnung dargestellt und werden im folgenden näher beschrieben.

Von den Figuren zeigen:
- Fig. 1: eine schematische Querschnittsansicht der erfindinngsgemäßen Vorrichtung;
- Fig. 2: eine Draufsicht auf die Unterseite einer Ausführungsform des Objektträgers 2 von Fig. 1; und
- Fig. 3: eine Querschnittsansicht des Objektträgers entlang der Linie I-I von Fig. 2.

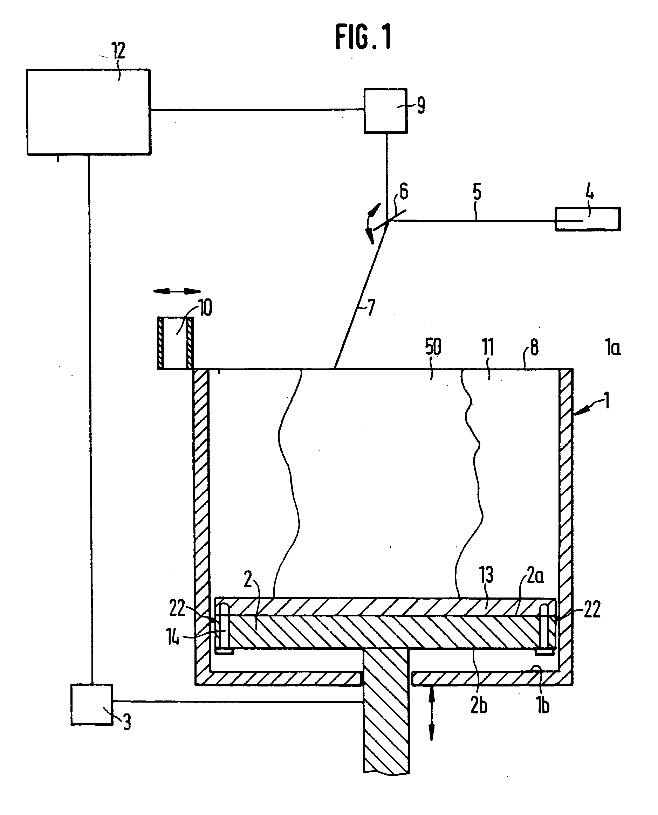

Wie am besten aus Fig. 1 ersichtlich ist, weist die Vorrichtung zum Herstellen eines dreidimensionalen Objektes einen an seiner Oberseite offenen Behälter 1 auf, in dem ein Objektträger 2 in Form einer zu der Oberkante 1a des Behälters parallel ausgerichteten Platte zum Tragen eines zu bildenden Objektes 50 mittels einer Höheneinstellvorrichtung 3 in vertikaler Richtung verschiebbar ist. Der Objektträger 2 weist einen horizontalen Querschnitt auf, der etwas geringer ist, als der entsprechende Quer-schnitt des Innenraumes des Behälters 1, so daß der Objektträger 2 leicht in dem Behälter 1 verschoben werden kann. Der Zwischenraum zwischen dem Rand des Objektträgers 2 und der Innenwand des Behälters 1 ist durch eine an dem Rand des Objektträgers 2 umlaufend angebrachte flexible Dichtlippe 22 abgedichtet.

Auf der dem offenen Ende des Behälters 1 zugewandten Oberseite 2a des Objektträgers 2 ist eine vorgefertigte Platte 13 aus verfestigtem Aufbaumaterial angeordnet, die als Sockel für das zu bildende Objekt 50 dient und die über Schrauben 14 mit dem Objektträger 2 verbunden ist. Dazu weist die Platte 13 an ihrer dem Objektträger 2 zugewandten Unterseite entsprechende Gewindelöcher auf. Der Querschnitt der Platte 13 entspricht dem Querschnitt des Objektträgers 2. Ferner ist die Platte 13 so auf dem Objektträger 2 justiert, daß sie parallel zur Oberkante 1a des Behälters ist.

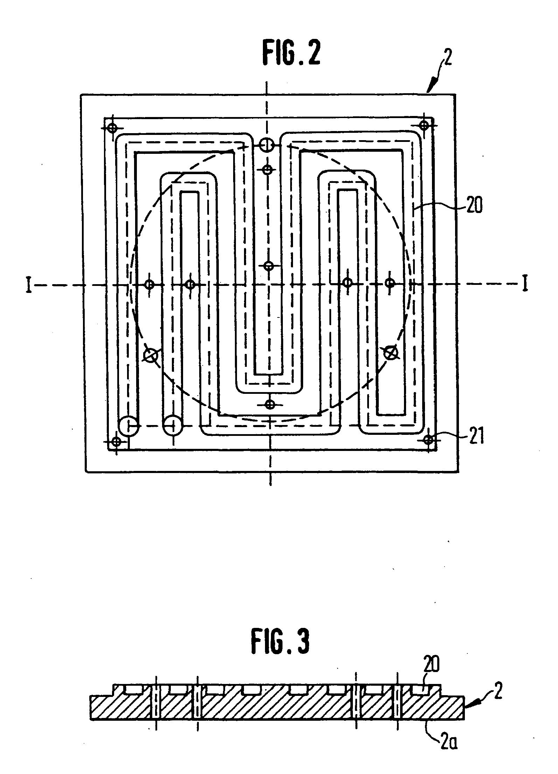

Wie am besten aus den Figuren 2 und 3 ersichtlich ist, weist der Objektträger 2 an seiner dem Behälterboden zugewandten Unterseite 2b einen in mäanderförmigen Windungen verlaufenden Kühlkanal 20 zur Aufnahme eines Kühlwasser führenden Kupferrohres auf. Ferner weist der Objektträger 2 eine Mehrzahl von Bohrungen 21 zum Hindurchführen der den Objektträger 2 mit der vorgesinterten Platte 13 zu verbindenden Schrauben 14 auf.

In dem beschriebenen Ausführungsbeispiel weist der Behälter 1, der Objektträger 2 und die vorgesinterte Platte 13 einen quadratischen Querschnitt auf. Der Querschnitt kann jedoch auch kreisförmig oder rechteckig sein oder jede beliebige Form aufweisen.

Der Objektträger 2 ist aus einem gut wärmeleitfähigen Metall, beispielsweise aus Aluminium, angefertigt. Die vorgesinterte Platte 13 ist aus demselben Aufbaumaterial gebildet, aus dem auch das Objekt 50 gebildet wird. Das Aufbaumaterial besteht bevorzugt aus Metallpulver, Keramikpulver, kunststoffummanteltem Metall- oder Keramikpulver oder kunstharzummanteltem Sand.

Oberhalb des Behälters 1 ist eine Bestrahlungseinrichtung 4 in Form eines Lasers angeordnet, die einen gerichteten Lichtstrahl 5 abgibt. Dieser wird über eine Ablenkeinrichtung 6, beispielsweise in Form eines Drehspiegels, als abgelenkter Strahl 7 auf die durch die Behälteroberkante 1 a definierte Arbeitsebene 8 fokussiert. Eine Steuerung 9 steuert die Ablenkeinrichtung 6 derart, daß der abgelenkte Strahl 7 auf jede gewünschte Stelle innerhalb der Arbeitsebene 8 auftrifft.

Eine Vorrichtung 10 zum Aufbringen einer gleichmäßigen Schicht eines pulverförmigen, durch Einwirkung elektromagnetischer Strahlung verfestigbaren Materiales 11, die beispielsweise als Vorratsbehälter mit Wischer zum Aufbringen und Glätten der Schichtausgebildet ist, ist horizontal über die Arbeitsebene 8 und parallel zu dieser bewegbar.

Die Höheneinstellvorrichtung 3 und die Steuerung 9 für die Bestrahlungseinrichtung 4 sind jeweils mit einer zentralen Steuereinheit 12 in Form eines Computers zur koordinierten Steuerung dieser Vorrichtungen verbunden.

Bei dem erfindungsgemäßen Verfahren wird in einem ersten Schritt die Platte 13 durch Verfestigen bzw. Sintern des entsprechenden Aufbaumaterials mittels Wärmeeinwirkung in einem Ofen hergestellt.

In einem nächsten Schritt wird der Objektträger 2 aus dem Behälter 1 in Richtung des offenen Endes des Behälters soweit bis zu einem Anschlag herausbewegt, daß die vorgesinterte Platte 13 leicht an dem Objektträger 2 zu befestigen ist. Dann wird die Platte 13 an dem Objektträger 2 durch Verschrauben befestigt.

In einem nächsten Schritt wird der Objektträger soweit nach unten gefahren, bis die Oberseite der vorgesinterten Platte 13 um eine: Schichtdicke unterhalb der Behälterkante 1a liegt. Dann wird mittels der Aufbringvorrichtung 10 eine erste Schicht des Materiales 11 auf die Platte 13 aufgebracht und mit dem Wischer geglättet. Daraufhin steuert die Steuereinheit 14 die Ablenkeinrichtung 6 über deren Steuerung derart, daß der abgelenkte Lichtstrahl 7 an solchen Stellen der Schicht des Materiales 11 auftrifft, die entsprechend von in der Steuereinheit 14 gespeicherten Koordinaten des Objektes 50 verfestigt werden sollen. Dadurch wird an diesen Stellen das Material verfestigt bzw. gesintert. Bevorzugt wird die Belichtung der ersten Pulverschicht danach noch ein zweites Mal durchgeführt, damit eine feste Verbindung zwischen der vorgesinterten Platte 13 und der ersten Schicht des Objektes 50 erzeugt wird. Da die Platte 13 aus demselben Material wie das zu bildende Objekt 50 besteht, ergibt sich bei der Verfestigung der ersten Schicht des Objektes eine optimal haftende Verbindung mit der Platte 13.

In einem nächsten Schritt wird der Objektträger 2 um die Dicke der nächsten Schicht abgesenkt und erneut mittels der Aufbringvorrichtung 10 eine zweite Materialschicht aufgetragen und geglättet und erneut verfestigt.

Die Verfahrensschritte Materialschicht aufbringen, glätten und verfestigen werden nun so oft durchgeführt, bis das herzustellende Objekt 50 vervollständigt ist. Da insbesondere beim Sintern von Metallpulver die erforderliche Laserleistung zwischen 100 und 200 Watt beträgt, findet eine erhebliche Erwärmung des Objektes 50 statt. Spitzentemperaturen von 900° C am Sinterpunkt und durchschnittliche Temperaturen des Objektes um 200° C sind möglich. Dies kann zur Oxidation des Aufbaumaterials führen. Deshalb wird während des gesamten Bauprozesses der Objektträger 2 gekühlt. Da das verwendete Aufbaumaterial im allgemeinen eine gute Wärmeleitfähigkeit besitzt, kann somit das Objekt 50 bzw. der gesamte Behälter 1 mit dem darin befindlichen Material 11 immer auf konstanter Temperatur gehalten werden.

Nach der Beendigung des Bauprozesses wird der Objektträger 2 nach oben aus dem Behälter herausgefahren und die vorgesinterte Platte 13 zusammen mit dem darauf gebildeten Objekt 50 abgeschraubt. An schließend wird das Objekt 50 mit einer Säge von der Platte 13 abgetrennt und nachbearbeitet.

Die Vorteile der Verwendung der vorgesinterten Platte 13 aus gesintertem Aufbaumaterial bestehen neben der Bauzeitverkürzung darin, daß eine stabile Basis für die ersten Objektschichten gegeben ist. Dies bedeutet, daß der Verzug bzw. die Verformung des Objektes reduziert wird.

Abwandlungen des beschriebenen Verfahrens sind möglich. Typischerweise wird die beschriebene Metallsintervorrichtung zum Aufbau von Formeinsätzen verwendet. Falls der Formeinsatz eine ebene Grundfläche aufweist, wird die vorgesinterte Platte 13 zu einem Bestandteil des gesinterten Objektes. Die Platte 13 wird durch Nachbearbeitungsschritte an das jeweiligen Objekt angepaßt. Dies geschieht beispielsweise mit einer Stichsäge, wobei die Platte 13 auf das richtige Maß zurechtgesägt wird. In diesem Falle ist die vorgesinterte Platte für einen neuen Bauprozeß verloren.

Falls der herzustellende Formeinsatz keine ebene Grundfläche auf weist, wird auf der vorgesinterten Platte 13 zuerst eine Stützkonstruktion und anschließend daran das Objekt aufgebaut. Nach erfolgtem Bauprozeß wird an der Stützkonstruktion das Objekt von der vorgesinterten Platte abgetrennt. Durch geeignete Wahl von Sollbruchstellen in der Stützkonstruktion kann das Trennen erleichtert werden. In diesem Falle ist die vorgesinterte Platte nach einer Vorbehandlung, die beispielsweise im Abfeilen der Oberfläche besteht, wieder für einen neuen Bauvorgang verwendbar.

Anstelle der nur aus verfestigtem Aufbaumaterial bestehenden Platte 13 kann auch eine Metallplatte, insbesondere eine Stahlplatte, verwendet werden, auf die eine oder mehrere Schichten des verfestigbaren Materials aufgetragen und verfestigt bzw. aufgesintert worden sind.

## Patentansprüche

1. Vorrichtung zum Herstellen eines dreidimensionalen Objektes durch aufeinanderfolgendes Verfestigen von Schichten durch Sintern eines pulverförmigen, mittels elektromagnetischer Strahlung oder Teilchenstrahlung verfestigbaren Aufbaumaterials (11) an dem jeweiligen Querschnitt des Objektes (50) entsprechenden Stellen, mit:
einer Tragevorrichtung zum Tragen des Objektes (50) mit einem hohenverstellbaren Träger (2) mit einer dem Objekt (50) zugewandten Oberseite (2a),
einer Aufbringvorrichtung (10) zum Aufbringen von Schichten des Materials (11) auf die Tragevorrichtung oder eine zuvor gebildete Schicht, und
einer Bestrahlungseinrichtung (4) zum Bestrahlen Von Schichten des materials (11) an den dem jeweiligen Querschnitt des Objektes (50) entsprechenden Stellen,
**dadurch gekennzeichnet, daß** eine auf der Oberseite (2a) des Trägers (2) lösbar befestigte vorgefertigte, aus einer stabilen Platte gebildete Unterlage (13) vorgesehen ist, die aus einem Material gebildet ist, an dem das Aufbaumaterial (11) beim Sintern anhaftet.

2. Vorrichtung nach Anspruch 1, **dadurch gekennzeichnet, daß**
die Unterlage (13) aus verfestigtem Aufbaumaterial (11) gebildet ist.

3. Vorrichtung nach Anspruch 1 oder 2, **dadurch gekennzeichnet, daß**
die Unterlage (13) als Platte ausgebildet ist, deren Querschnitt dem des Trägers (2) entspricht.

4. Vorrichtung nach einem der Ansprüche 1 bis 3, **dadurch gekennzeichnet, daß**
der Träger (2) als Platte ausgebildet ist.

5. Vorrichtung nach einem der Ansprüche 1 bis 4, **dadurch gekennzeichnet, daß**
der Träger (2) eine Kühlvorrichtung zum Abführen der bei dem Herstellungsprozeß im Objekt (50) und in der Unterlage (13) auftretenden Wärme aufweist.

6. Vorrichtung nach Anspruch 5, **dadurch gekennzeichnet, daß**
der Träger (2) an seiner dem Objekt abgewandten Seite (2b) Kühlkanäle (20) aufweist.

7. Vorrichtung nach einem der Ansprüche 1 bis 6, **dadurch gekennzeichnet, daß**
die Unterlage (13) über Befestigungsmittel, insbesondere Schrauben (14) mit dem Träger (2) verbunden ist.

8. Vorrichtung nach einem der Ansprüche 1 bis 7, **dadurch gekennzeichnet, daß**
die Bestrahlungseinrichtung (4) einen Laser umfaßt.

9. Vorrichtung nach einem der Ansprüche 1 bis 8, **dadurch gekennzeichnet, daß**
das Aufbaumaterial (11) Metallpulver, Keramikpulver, kunststoffummanteltes Metall- oder Keramikpulver oder kunstharzummantelten Sand umfaßt.

10. Verfahren zum Herstellen eines dreidimensionalen Objektes (50), durch aufeinanderfolgendes Verfestigen von Schichten durch Sintern eines pulverförmigen, mittels elektromagnetischer Strahlung oder Teilchenstrahlung verfestigbaren Aufbaumaterials (11) an dem jeweiligen Querschnitt des Objektes entsprechenden Stellen,
**dadurch gekennzeichnet, daß** das Objekt (50) auf einer auf einem Objektträger (2) lösbar befestigten vorgefertigten, aus einer stabilen Platte gebildeten Unterlage (13) aufgebaut wird, wobei die Unterlage (13) aus einem Material gebildet ist, an dem das Aufbaumaterial (11) beim Sintern anhaftet.

11. Verfahren nach Anspruch 10, **dadurch gekennzeichnet, daß** die Unterlage (13) durch Verfestigen von dem zur Herstellung des Objektes (50) verwendeten Aufbaumaterial (11) hergestellt wird und danach auf dem Objektträger befestigt wird.

12. Verfahren nach Anspruch 11, **dadurch gekennzeichnet, daß** das Aufbaumaterial (11) zum Bilden der Unterlage (13) mittels Wärmeeinwirkung in einem Ofen verfestigt wird.

13. Verfahren nach einem der Ansprüche 10 bis 12, **dadurch gekennzeichnet, daß** die Unterlage durch Verfestigen von mindestens einer Schicht des Aufbaumaterials (11) auf einer Metallplatte hergestellt wird.

14. Vorrichtung nach einem der Ansprüche 1 bis 9, **dadurch gekennzeichnet, daß**
die Unterlage als Metallplatte mit mindestens einer darauf verfestigten Schicht des Aufbaumaterials ausgebildet ist, wobei die Metallplatte der Oberseite (2a) des Trägers (2) zugewandt ist.

## Claims

1. Apparatus for the manufacturing of a three-dimensional object by successive consolidation of layers by sintering of a pulverulent structural material (11) which can be consolidated by means of electromagnetic radiation or particle radiation at points corresponding to the respective cross section of the object (50), having:
a supporting apparatus to support the object (50) with a vertically adjustable support (2) having a top (2a) facing the object (50),
an application apparatus (10) for applying layers of the material (11) to the supporting apparatus or on a previously formed layer, and
an irradiation device (4) for irradiating layers of the material (11) at the points corresponding to the respective cross section of the object (50),
**characterized in that** a prefabricated substrate (13), formed from a stable plate and releasably secured on the top (2a) of the support (2) is provided, and is formed from a material to which the structural material (11) adheres on sintering.

2. Apparatus according to Claim 1, **characterized in that** the substrate (13) is formed from consolidated structural material (11).

3. Apparatus according to Claim 1 or 2, **characterized in that**
the substrate (13) is designed as a plate whose cross section corresponds to that of the support (2).

4. Apparatus according to one of Claims 1 to 3, **characterized in that**
the support (2) is designed as a plate.

5. Apparatus according to one of Claims 1 to 4, **characterized in that**
the support (2) possesses a cooling apparatus for removing the heat arising during the manufacturing process in the object (50) and in the substrate (13).

6. Apparatus according to Claim 5, **characterized in that** the support (2) possesses cooling channels (20) on its side (2b) facing away from the object.

7. Apparatus according to one of Claims 1 to 6, **characterized in that**
the substrate (13) is connected to the support (2) via securing means, in particular screws (14).

8. Apparatus according to one of Claims 1 to 7, **characterized in that**
the irradiation device (4) comprises a laser.

9. Apparatus according to one of Claims 1 to 8, **characterized in that**
the structural material (11) comprises metal powder, ceramic powder, plastic-shelled metal or ceramic powder or synthetic resin-shelled sand.

10. Method for the manufacturing of a three-dimensional object (50) by successive consolidation of layers by sintering of a pulverulent structural material (11) which can be consolidated by means of electromagnetic radiation or particle radiation at points corresponding to the respective cross section of the object,
**characterized in that** the object (50) is constructed on a substrate (13), formed from a stable plate and releasably secured on an object support (2), the substrate (13) being formed from a material to which the structural material (11) adheres on sintering.

11. Method according to Claim 10, **characterized in that** the substrate (13) is produced by consolidation of the structural material (11) used for the manufacturing of the object (50) and is subsequently secured on the object support.

12. Method according to Claim 11, **characterized in that** the structural material (11) for forming the substrate (13) is consolidated by the action of heat in an oven.

13. Method according to one of Claims 10 to 12, **characterized in that** the substrate is manufactured by consolidation of at least one layer of the structural material (11) on a metal plate.

14. Apparatus according to one of Claims 1 to 9, **characterized in that**
the substrate is formed as a metal plate with at least one layer of the structural material consolidated thereon, the metal plate facing the top (2a) of the support (2).

## Revendications

1. Dispositif de fabrication d'un objet tridimensionnel par la solidification successive de couches par frittage d'un matériau de construction pulvérulent (11), solidifiable au moyen d'un rayonnement électromagnétique ou de rayonnement de particules aux endroits correspondant à la section respective de l'objet (50), comportant :
- un dispositif formant support pour supporter l'objet (50) avec un support réglable en hauteur (2) présentant une face supérieure (2a) tournée vers l'objet (50),
- un dispositif d'épandage (10) pour déposer des couches de matériau (11) sur le dispositif formant support ou une couche réalisée au préalable, et
- un dispositif de rayonnement (4) pour éclairer des couches de matériau (11) aux endroits correspondant à la section respective de l'objet (50),
**caractérisé en ce qu'**une sous-couche constituée d'une plaque solide (13) préfabriquée et fixée de manière amovible est prévue sur la face supérieure (2a) du support (2), cette sous-couche étant réalisée dans un matériau auquel adhère le matériau de construction (11) lors du frittage.

2. Dispositif selon la revendication 1, **caractérisé en ce que** la sous-couche (13) est réalisée dans un matériau de construction solidifié (11).

3. Dispositif selon la revendication 1 ou 2, **caractérisé en ce que** la sous- couche (13) est conçue sous la forme d'une plaque dont la section correspond à celle du support (2).

4. Dispositif selon l'une quelconque des revendications 1 à 3, **caractérisé en ce que** le support (2) est conçu sous forme de plaque.

5. Dispositif selon l'une quelconque des revendications 1 à 4, **caractérisé en ce que** le support (2) présente un dispositif de refroidissement pour évacuer la chaleur apparaissant durant le processus de fabrication dans l'objet (50) et dans la sous-couche (13).

6. Dispositif selon la revendication 5, **caractérisé en ce que** le support (2) présente sur sa face opposés à l'objet (2b) des canaux de refroidissement (20).

7. Dispositif selon l'une quelconque des revendications 1 à 6, **caractérisé en ce que** la sous-couche (13) est associée au support (2) à l'aide de moyens de fixation, notamment des vis (14).

8. Dispositif selon l'une quelconque des revendications 1 à 7, **caractérisé en ce que** le dispositif de rayonnement (4) comprend un laser.

9. Dispositif selon l'une quelconque des revendications 1 à 8, **caractérisé en ce que** le matériau de construction (11) comprend du métal ou de la céramique pulvérisée, du métal ou de la céramique pulvérisée et revêtue de plastique ou du sable revêtu de résine synthétique.

10. Procédé de fabrication d'un objet tridimensionnel (50), comportant la fixation successive de couches par frittage d'un matériau de construction (11) pulvérulent et pouvant être solidifié au moyen d'un rayonnement électromagnétique ou d'un rayonnement de particules aux endroits correspondant à la section respective de l'objet,
**caractérisé en ce que** l'objet (50) est monté sur une sous-couche (13) constituée d'une plaque solide, préfabriquée et fixée de manière amovible sur un support d'objet (2), la sous-couche (13) étant réalisée dans un matériau auquel adhère le matériau de construction (11) lors du frittage.

11. Procédé selon la revendication 10, **caractérisé en ce que** la sous-couche (13) réalisée par solidification du matériau de construction (11) utilisé pour fabriquer l'objet (50) et est ensuite fixé sur le support d'objet.

12. Procédé selon la revendication 11, **caractérisé en ce que** le matériau de construction (11) pour réaliser la sous-couche (13) est solidifié sous l'effet de la chaleur dans un four.

13. Procédé selon l'une quelconque des revendications 10 à 12, **caractérisé en ce que** la sous-couche est réalisée par solidification d'au moins une couche du matériau de construction (11) sur une plaque métallique.

14. Dispositif selon l'une quelconque des revendications 1 à 9, **caractérisé en ce que** la sous-couche est réalisée sous la forme de plaque métallique avec au moins une couche du matériau de construction pouvant être solidifiée dessus, tournée vers la plaque métallique de la face supérieure (2a) du support (2).
